# FASCICULE DE BREVET EUROPEEN

(11) **EP 2 883 785 B1**
(45) Date de publication et mention de la délivrance du brevet: **19.08.2020**
(21) Numéro de dépôt: 14181681.9
(22) Date de dépôt: 20.08.2014
(51) Int. Cl.: B60L 50/50

(54) **Velo a assistance electrique**
Elektrofahrrad
Power-assisted bicycle

(30) Priorité: 19.09.2013 FR 1359025
(43) Date de publication de la demande: 17.06.2015
(73) Titulaire: JCDecaux SA, 92200 Neuilly-Sur-Seine (FR)
(72) Inventeur: Forestier, Jean-Marc, 78180 MONTIGNY LE BRETONNEUX (FR); Ardouin, Thieric, 78340 LES CLAYES SOUS BOIS (FR)
(74) Mandataire: Plasseraud IP

(56) Documents cités:
- EP-A2- 1 445 186
- CN-A- 103 000 843
- DE-A1- 2 124 274
- JP-A- H10 226 379
- JP-A- H11 129 960
- JP-A- 2003 175 882
- JP-A- 2013 177 085
- US-A- 4 044 852
- US-A1- 2005 191 543

## Description

### DOMAINE DE L'INVENTION

La présente invention concerne les vélos à assistance électrique (VAE).

Plus particulièrement, l'invention concerne un vélo à assistance électrique comprenant :
- une armature portée par deux roues ;
- un moteur électrique adapté pour entraîner au moins une des roues ; et
- un support de batterie monté sur l'armature et comportant une paroi latérale annulaire qui délimite un logement intérieur en forme de puits ouvert vers le haut en position normale d'utilisation du vélo et qui est adapté pour recevoir une batterie amovible par emboîtement vertical.

### ARRIERE-PLAN DE L'INVENTION

Un exemple d'un vélo à assistance électrique de ce type est donné notamment dans le document EP 0 712 779 B1, dans lequel le support de batterie comprend un boîtier externe fermé par un couvercle et dans lequel est logé un boîtier interne contenant des batteries.

D'autres exemples de vélos à assistance électrique sont décrits dans les documents DE2124274A1, JPH10226379A, JPH11129960, EP1445186A2, US4044852, CN103000843A et JP2003175882A. Le document EP 1 445 186 A2 décrit un vélo à assistance électrique selon le préambule de la revendication 1.

### OBJETS DE L'INVENTION

La présente invention a pour but de proposer un vélo à assistance électrique dont le support de batterie est amélioré.

A cet effet, l'invention propose un vélo à assistance électrique comprenant :
- une armature portée par deux roues ;
- un moteur électrique adapté pour entraîner au moins une des roues ; et
- un support de batterie monté sur l'armature et comportant une paroi latérale annulaire qui délimite un logement intérieur en forme de puits ouvert vers le haut en position normale d'utilisation du vélo et qui est adapté pour recevoir une batterie amovible par emboîtement vertical,
le logement intérieur étant en outre ouvert vers le bas, la paroi latérale portant des contacts électriques latéraux intérieurs disposés dans le logement intérieur et adaptés pour venir en appui sensiblement horizontal contre des contacts électriques latéraux extérieurs appartenant à ladite batterie pour alimenter le moteur électrique lorsque ladite batterie est emboîtée dans ledit logement intérieur, caractérisé en ce que le support de batterie présente une forme générale de pyramide tronquée, la paroi latérale annulaire étant fermée et formant quatre faces latérales opposées deux à deux.

Grâce à ces dispositions, le support de batterie du VAE est non seulement simple à fabriquer, donc peu coûteux, mais il permet également une mise en place rapide de la batterie. Par ailleurs, un tel support peut être adapté à toute taille et forme de batterie, et peut être utilisé même lorsqu'il pleut.

Dans divers modes de réalisation du vélo à assistance électrique selon l'invention, on peut avantageusement avoir recours en outre à l'une et/ou à l'autre des dispositions suivantes :
- le support de batterie comprend des ressorts de rappel adaptés pour solliciter élastiquement les contacts électriques latéraux intérieurs vers l'intérieur du support de batterie ;
- le support de batterie comprend deux paires de contacts électriques latéraux intérieurs opposées ;
- la paroi latérale du support de batterie porte en outre des clips disposés dans le logement intérieur et adaptés pour s'encliqueter avec des encoches ménagées sur ladite batterie ;

- chaque clip comporte une languette sensiblement en forme de V qui fait saillie de la paroi latérale vers l'intérieur du support de batterie ;
- le support de batterie comprend deux paires de clips opposées ;
- le vélo comporte en outre ladite batterie emboîtée dans le logement intérieur dudit support de batterie, les contacts électriques latéraux intérieurs du support de batterie étant en appui sensiblement horizontal contre les contacts électriques latéraux extérieurs de ladite batterie pour alimenter le moteur électrique ; et
- les contacts électriques latéraux intérieurs du support de batterie exercent sur les contacts électriques latéraux extérieurs de ladite batterie une force d'appui qui est comprise entre 10 et 15 N.

### BREVE DESCRIPTION DES DESSINS

L'invention sera mieux comprise à la lecture de la description qui va suivre d'un de ses modes de réalisation, donné uniquement à titre d'exemple non limitatif en se référant aux dessins annexés, sur lesquels :
- la Figure 1 est une vue latérale d'un vélo à assistance électrique selon l'invention ;
- la Figure 2 est une vue en perspective d'un support de batterie et d'une batterie du VAE de la Figure 1 ;
- la Figure 3 est une vue identique à celle de la Figure 2 et coupée selon un plan de coupe vertical longitudinal, la batterie étant disposée à l'extérieur du support de batterie ; et
- la Figure 4 est une vue identique à celle de la Figure 3, la batterie étant disposée à l'intérieur du support de batterie.

### DESCRIPTION PLUS DETAILLEE

Sur les différentes Figures, les mêmes références désignent des éléments identiques ou similaires.

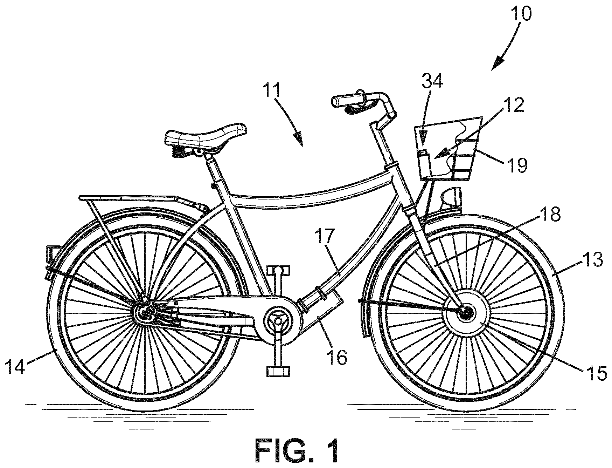

La Figure 1 illustre un vélo à assistance électrique (VAE) 10 selon l'invention.

Le VAE 10 comprend de manière générale une armature 11 portée par deux roues 13, 14, un moteur électrique 15 adapté pour entraîner au moins une des roues 13, 14, une batterie 34 amovible pour fournir du courant au moteur électrique 15, un support de batterie 12 monté sur l'armature 11, et une unité centrale 16 adaptée pour piloter le moteur électrique 15 en fonction d'informations fournies par une pluralité de capteurs, en particulier des capteurs de vitesse et des capteurs de couple de pédale.

Dans l'exemple considéré, le moteur électrique 15 est un moteur moyeu inséré en lieu et place de l'axe de roue avant 13 et adapté pour entraîner directement la roue avant 13.

L'armature 11 comporte notamment un cadre 17 et une fourche avant 18.

Dans l'exemple considéré, l'unité centrale 16 est fixée sur le cadre 17 et le support de batterie 12 est monté à l'intérieur d'un panier 19 fixé sur la fourche avant 18.

Ainsi, en fonction des informations (vitesse et couple de pédale) fournies par les différents capteurs à l'unité centrale 16, l'unité centrale 16 régule le courant fourni par la batterie 34 au moteur électrique 15, et le moteur électrique 15 assiste plus ou moins l'utilisateur en entraînant plus ou moins la roue avant 13.

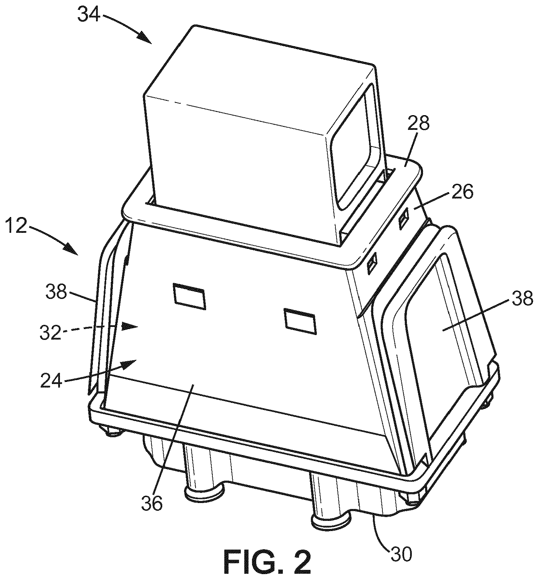

En référence à la Figure 2, le support de batterie 12 comprend une paroi latérale 26 annulaire et deux faces d'extrémité opposées, à savoir une face d'extrémité supérieure 28 et une face d'extrémité inférieure 30.

La paroi latérale 26 et les deux faces d'extrémité opposées 28, 30 délimitent entre elles un logement intérieur 32 adapté pour recevoir la batterie 34 par emboîtement vertical.

Le logement intérieur 32 est en forme de puits ouvert vers le haut et vers le bas en position normale d'utilisation du VAE 10 illustrée sur la Figure 1.

En d'autres termes, le support de batterie 12 est ouvert vers l'extérieur sur ses deux faces d'extrémité opposées 28, 30. Le logement intérieur 32 est traversant et débouche vers l'extérieur du support de batterie 12 sur la face d'extrémité supérieure 28 et sur la face d'extrémité inférieure 30. Le support de batterie 12 est un support sans fond.

Ainsi, lorsqu'il pleut, l'eau qui s'introduit dans le support de batterie 12 par la face d'extrémité supérieure 28 peut s'écouler facilement à travers le logement intérieur 32 et être évacuée vers l'extérieur par la face d'extrémité inférieure 30. Selon l'invention, la paroi latérale 26 annulaire est fermée et forme quatre faces latérales opposées deux à deux 36, 38. Le support de batterie 12 présente une forme générale de pyramide tronquée.

En variante, la paroi latérale 26 peut être ouverte et le support de batterie 12 peut présenter une forme générale quelconque appropriée, par exemple une forme générale de cylindre, de parallélépipède rectangle, etc.

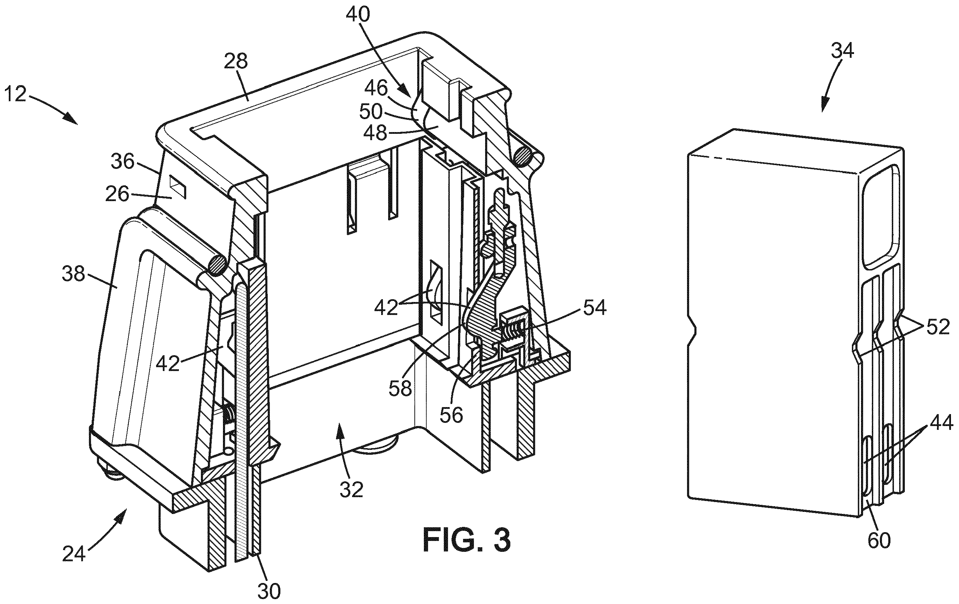

Comme on le voit mieux sur la Figure 3, le logement intérieur 32 possède une forme et des dimensions correspondant à la forme et aux dimensions de la batterie 34. Ici, le logement intérieur 32 et la batterie 34 présentent une forme de parallélépipède rectangle.

En variante, le logement intérieur 32 et la batterie 34 peuvent présenter une forme quelconque appropriée, par exemple une forme de cylindre.

Le support de batterie 12 comprend en outre des éléments de maintien 40 adaptés pour maintenir la batterie 34 dans le logement intérieur 32, et des contacts électriques latéraux intérieurs 42 adaptés pour être reliés électriquement à des contacts électriques latéraux extérieurs 44 de la batterie 34.

Les éléments de maintien 40 et les contacts électriques 42 sont portés par la paroi latérale 26 du support de batterie 12.

Les éléments de maintien 40 comprennent des clips 46 disposés dans le logement intérieur 32 et faisant chacun saillie d'une surface interne 48 de la paroi latérale 26 vers l'intérieur du support de batterie 12.

Les clips 46 sont agencés de façon adjacente à la face d'extrémité supérieure 28 du support de batterie 12.

Dans l'exemple considéré, les éléments de maintien 40 comprennent deux paires de clips 46 opposées, l'une des paires étant agencée sur l'une des faces latérales opposées 38 de la paroi latérale 26 et l'autre des paires étant agencée sur l'autre des faces latérales opposées 38 de la paroi latérale 26.

En variante, les clips 46 peuvent être disposés sur chacune des deux faces latérales opposées 36 de la paroi latérale 26.

Chaque clip 46 est formé par une languette 50 fixée à une extrémité sur la paroi latérale 26 et recourbée à une extrémité opposée en formant sensiblement un V.

Les clips 46 sont ainsi adaptés pour se mettre en prise par encliquetage avec des encoches 52 complémentaires prévues sur la batterie 34.

Les contacts électriques latéraux intérieurs 42 sont disposés dans le logement intérieur 32 et adaptés pour venir en appui sensiblement horizontal contre les contacts électriques latéraux extérieurs 44 appartenant à la batterie 34 pour alimenter le moteur électrique 15 lorsque la batterie 34 est emboîtée dans le logement intérieur 32.

Les contacts électriques latéraux intérieurs 42 sont agencés de façon adjacente à la face d'extrémité inférieure 30 du support de batterie 12.

Dans le mode de réalisation considéré, le support de batterie 12 comprend deux paires de contacts électriques latéraux intérieurs 42 opposées, l'une des paires étant agencée sur l'une des faces latérales opposées 38 de la paroi latérale 26 et l'autre des paires étant agencée sur l'autre des faces latérales opposées 38 de la paroi latérale 26.

En variante, les contacts électriques latéraux intérieurs 42 peuvent être disposés sur chacune des deux faces latérales opposées 36 de la paroi latérale 26.

Le support de batterie 12 comprend également des ressorts de rappel 54 adaptés pour solliciter élastiquement les contacts électriques latéraux intérieurs 42 vers l'intérieur du support de batterie 12.

Ici, le support de batterie 12 comprend quatre ressorts de rappel 54, un ressort de rappel 54 pour chaque contact électrique latéral intérieur 42.

Chaque contact électrique latéral intérieur 42 est ainsi fixé à une extrémité sur la paroi latérale 26 et maintenu dans une position dans laquelle il est plaqué, à une extrémité opposée, par le ressort de rappel 54 correspondant contre une butée 56 ménagée dans la paroi latérale 26.

Entre ces deux extrémités, chaque contact électrique 42 présente en outre une protubérance centrale 58 arrondie qui fait saillie de la surface interne 48 de la paroi latérale 26 vers l'intérieur du support de batterie 12 lorsque le contact électrique latéral intérieur 42 est dans la position plaquée.

Les protubérances 58 sont destinées à venir en appui contre le contact électrique latéral extérieur 44 correspondant de la batterie 34 lorsque cette dernière est montée sur le support de batterie 12.

Ainsi, les contacts électriques latéraux intérieurs 42/ressorts de rappel 54 participent au bon maintien de la batterie 34 sur le support de batterie 12 et assurent une connexion électrique efficace entre le support de batterie 12 et la batterie 34.

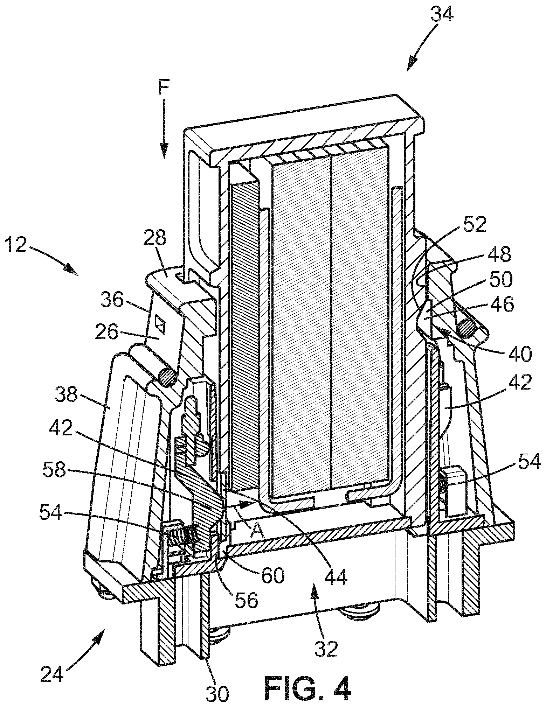

Lorsqu'un utilisateur souhaite utiliser la batterie 34, il lui suffit de l'insérer sensiblement verticalement dans le support de batterie 12 par la face d'extrémité supérieure 28, comme indiqué par la flèche F sur la Figure 4, jusqu'à ce que les clips 46 s'encliquettent avec les encoches 52. Un seul mouvement est donc nécessaire pour monter la batterie 34 sur le support de batterie 12.

La batterie 34 est alors maintenue emboîtée dans le logement intérieur 32 par les clips 46/encoches 52, mais également par les contacts électriques latéraux intérieurs 42/ressorts de rappel 54, les protubérances 58 étant en appui sensiblement horizontal contre les contacts électriques latéraux extérieurs 44 de la batterie 34.

La raideur des ressorts de rappel ainsi que la configuration des différents éléments du support de batterie 12 sont tels que les contacts électriques latéraux intérieurs 42 exercent sur les contacts électriques latéraux extérieurs 44 une force d'appui A comprise entre 10 et 15 N.

Lors de l'insertion de la batterie 34 dans le logement intérieur 32, les protubérances 58 des contacts électriques latéraux intérieurs 42 du support de batterie 12 frottent contre l'extrémité inférieure 60 de la batterie 34.

Ainsi, un nettoyage par frottement des contacts électriques latéraux intérieurs 42, en particulier des protubérances 58, est réalisé automatiquement, améliorant de ce fait la connexion électrique entre le support de batterie 12 et la batterie 34.

L'invention propose donc un vélo à assistance électrique muni d'un support de batterie qui est simple à fabriquer et à utiliser et dont la fiabilité est améliorée.

En effet, la batterie s'emboîte verticalement sur le support de batterie en un seul geste et grâce aux éléments de maintien mais également grâce aux contacts électriques du support de batterie et des ressorts de rappel, le support de batterie garantit un maintien efficace de la batterie et une connexion électrique efficace avec la batterie.

En outre, que la batterie soit présente ou non, le fait que le support de batterie soit ouvert vers le haut et vers le bas permet de limiter toute accumulation d'éléments extérieurs à l'intérieur du support de batterie, notamment de l'eau mais aussi de la poussière.

Par ailleurs, le support de batterie peut être adapté à toute taille et forme de batterie, notamment à des batteries de petite taille.

## Revendications

1. Vélo à assistance électrique (10) comprenant :
- une armature (11) portée par deux roues (13, 14) ;
- un moteur électrique (15) adapté pour entraîner au moins une des roues (13, 14) ; et
- un support (12) de batterie (34) monté sur l'armature (11) et comportant une paroi latérale (26) annulaire qui délimite un logement intérieur (32) en forme de puits ouvert vers le haut en position normale d'utilisation du vélo (10) et qui est adapté pour recevoir une batterie (34) amovible par emboîtement vertical,
le logement intérieur (32) étant en outre ouvert vers le bas,
et la paroi latérale (26) portant des contacts électriques latéraux intérieurs (42) disposés dans le logement intérieur (32) et adaptés pour venir en appui sensiblement horizontal contre des contacts électriques latéraux extérieurs (44) appartenant à ladite batterie (34) pour alimenter le moteur électrique (15) lorsque ladite batterie (34) est emboîtée dans ledit logement intérieur (32), **caractérisé en ce que** le support (12) de batterie (34) présente une forme générale de pyramide tronquée, la paroi latérale (26) annulaire étant fermée et formant quatre faces latérales (36, 38) opposées deux à deux.

2. Vélo à assistance électrique (10) selon la revendication 1, dans lequel le support (12) de batterie (34) comprend des ressorts de rappel (54) adaptés pour solliciter élastiquement les contacts électriques latéraux intérieurs (42) vers l'intérieur du support (12) de batterie (34).

3. Vélo à assistance électrique (10) selon la revendication 1 ou 2, dans lequel le support (12) de batterie (34) comprend deux paires de contacts électriques latéraux intérieurs (42) opposées.

4. Vélo à assistance électrique (10) selon l'une quelconque des revendications 1 à 3, dans lequel la paroi latérale (26) du support (12) de batterie (34) porte en outre des clips (46) disposés dans le logement intérieur (32) et adaptés pour s'encliqueter avec des encoches (52) ménagées sur ladite batterie (34).

5. Vélo à assistance électrique (10) selon la revendication 4, dans lequel chaque clip (46) comporte une languette (50) sensiblement en forme de V qui fait saillie de la paroi latérale (26) vers l'intérieur du support (12) de batterie (34).

6. Vélo à assistance électrique (10) selon la revendication 4 ou 5, dans lequel le support (12) de batterie (34) comprend deux paires de clips (46) opposées.

7. Vélo à assistance électrique (10) selon l'une quelconque des revendications 1 à 6, comportant en outre ladite batterie (34) emboîtée dans le logement intérieur (32) dudit support (12) de batterie (34), les contacts électriques latéraux intérieurs (42) du support (12) de batterie (34) étant en appui sensiblement horizontal contre les contacts électriques latéraux extérieurs (44) de ladite batterie (34) pour alimenter le moteur électrique (15).

8. Vélo à assistance électrique (10) selon la revendication 7, dans lequel les contacts électriques latéraux intérieurs (42) du support (12) de batterie (34) exercent sur les contacts électriques latéraux extérieurs (44) de ladite batterie (34) une force d'appui (A) qui est comprise entre 10 et 15 N.

## Patentansprüche

1. Elektrofahrrad (10) aufweisend:
- ein von zwei Rädern (13, 14) getragenes Gestell (11);
- einen zum Antreiben mindestens eines der Räder (13, 14) eingerichteten Elektromotor (15); und
- einen Batterieträger (12) für eine Batterie (34), der an dem Gestell (11) angebracht ist und eine umlaufende Seitenwand (26) aufweist, die einen inneren Aufnahmeraum (32) in Form eines in der normalen Verwendungsposition des Fahrrads (10) nach oben offenen Schachts aufweist, der eingerichtet ist, eine abnehmbare Batterie durch vertikales Einsetzen zu empfangen,
wobei der innere Aufnahmeraum (32) außerdem nach unten offen ist und die Seitenwand (26) innere seitliche elektrische Kontakte (42) trägt, die in dem inneren Aufnahmeraum (32) angeordnet sind und eingerichtet sind, im Wesentlichen horizontal an äußeren seitlichen elektrischen Kontakten (44) der Batterie (34) zur Anlage zu kommen, um den Elektromotor (15) zu versorgen, wenn die Batterie (34) in den inneren Aufnahmeraum (32) eingesetzt ist,
**dadurch gekennzeichnet, dass** der Batterieträger (12) eine allgemeine Form eines Pyramidenstumpfs aufweist, wobei die umlaufende Seitenwand (26) geschlossen ist und vier Seitenwände (36, 38) bildet, die sich zwei zu zwei gegenüberliegen.

2. Elektrofahrrad (10) nach Anspruch 1, in welchem der Batterieträger (12) Rückstellfedern (54) aufweist, die eingerichtet sind, die inneren seitlichen elektrischen Kontakte (42) zum Inneren des Batterieträgers (12) hin elastisch vorzuspannen.

3. Elektrofahrrad (10) nach Anspruch 1 oder 2, in welchem der Batterieträger (12) zwei sich gegenüberliegende Paare von inneren seitlichen elektrischen Kontakten (42) aufweist.

4. Elektrofahrrad (10) nach einem der Ansprüche 1 bis 3, in welchem die Seitenwand (26) des Batterieträgers (12) ferner Klipse (46) aufweist, die in dem inneren Aufnahmeraum (32) angeordnet sind und eingerichtet sind, in Kerben (52), die in der Batterie (34) ausgespart sind, einzuschnappen.

5. Elektrofahrrad (10) nach Anspruch 4, in welchem jeder Klips (46) eine im Wesentlichen V-förmige Zunge aufweist, die von der Seitenwand (26) zum Inneren des Batterieträgers (12) vorspringt.

6. Elektrofahrrad (10) nach Anspruch 4 oder 5, in welchem der Batterieträger (12) zwei sich gegenüberliegende Paare von Klipsen (46) aufweist.

7. Elektrofahrrad (10) nach einem der Ansprüche 1 bis 6, ferner aufweisend die in dem inneren Aufnahmeraum (32) des Batterieträgers (12) eingesetzte Batterie (34), wobei die inneren seitlichen elektrischen Kontakte (42) des Batterieträgers (12) im Wesentlichen horizontal an den äußeren seitlichen elektrischen Kontakten (44) der Batterie (34) anliegen, um den Elektromotor (15) zu versorgen.

8. Elektrofahrrad (10) nach Anspruch 7, in welchem die inneren seitlichen elektrischen Kontakte (42) des Batterieträgers (12) auf die äußeren seitlichen elektrischen Kontakte (44) der Batterie (34) eine Anlagekraft (A) ausüben, die zwischen 10 und 15N ist.

## Claims

1. Electric assisted bicycle (10) comprising:
- a frame (11) supported by two wheels (13, 14);
- an electric motor (15) adapted to drive at least one of the two wheels (13, 14); and
- a battery (34) holder (12) mounted on the frame (11) and having an annular side wall (26) which defines an inner housing (32) in the form of a shaft open at the top when the bicycle (10) is in the normal usage position, and which is adapted to receive a vertically inserted removable battery (34),
the inner housing (32) being also open at the bottom,
and the side wall (26) supporting internal lateral electrical contacts (42) arranged in the inner housing (32) and adapted to press substantially horizontally against external lateral electrical contacts (44) that are part of said battery (34) in order to supply power to the electric motor (15) when said battery (34) is fitted into place in said inner housing (32),
**characterized in that** the battery (34) holder (12) has the general shape of a truncated pyramid, the annular side wall (26) being closed and forming four side faces (36, 38) arranged in opposing pairs.

2. Electric assisted bicycle (10) according to claim 1, wherein the battery (34) holder (12) comprises springs (54) adapted to resiliently urge the internal lateral electrical contacts (42) towards the inside of the battery (34) holder (12).

3. Electric assisted bicycle (10) according to claim 1 or 2, wherein the battery (34) holder (12) comprises two opposing pairs of internal lateral electrical contacts (42) .

4. Electric assisted bicycle (10) according to any one of claims 1 to 3, wherein the side wall (26) of the battery (34) holder (12) further supports clips (46) arranged in the inner housing (32) and adapted to snap-fit into recesses (52) provided on said battery (34).

5. Electric assisted bicycle (10) according to claim 4, wherein each clip (46) comprises a substantially V-shaped tongue (50) projecting from the side wall (26) towards the inside of the battery (34) holder (12).

6. Electric assisted bicycle (10) according to claim 4 or 5, wherein the battery (34) holder (12) comprises two opposing pairs of clips (46).

7. Electric assisted bicycle (10) according to any one of claims 1 to 6, further comprising said battery (34) fitted into place in the inner housing (32) of said battery (34) holder (12), the internal lateral electrical contacts (42) of the battery (34) holder (12) pressing substantially horizontally against the external lateral electrical contacts (44) of said battery (34) in order to supply power to the electric motor (15).

8. Electric assisted bicycle (10) according to claim 7, wherein the internal lateral electrical contacts (42) of the battery (34) holder (12) exert a bearing force (A) of between 10 and 15 N on the external lateral electrical contacts (44) of said battery (34).
